# EUROPÄISCHE PATENTANMELDUNG

(11) **EP 4 667 656 A1**
(43) Veröffentlichungstag der Anmeldung: **24.12.2025**
(21) Anmeldenummer: 25176546.7
(22) Anmeldetag: 15.05.2025
(51) Int. Cl.: E01C 19/26, E02F 9/16, B62D 33/063, B66C 13/54

(54) **BEDIENSTANDSYSTEM FÜR EINE ARBEITSMASCHINE**

(30) Priorität: 19.06.2024 DE 102024117232
(71) Anmelder: Hamm AG, 95643 Tirschenreuth (DE)
(72) Erfinder: Zant, Claus, Tirschenreuth (DE)
(74) Vertreter: Ruttensperger Lachnit Trossin Gomoll

(57) **Zusammenfassung**

Ein Bedienstandsystem für eine Arbeitsmaschine, insbesondere selbstfahrende Bodenbearbeitungsmaschine, umfasst eine an einem Maschinenrahmen (12) einer Arbeitsmaschine (10) festzulegende Aufhängungsträgeranordnung (28) und einen vermittels eines Bewegungssystems (48) an der Aufhängungsträgeranordnung (26) in einer ersten Verschieberichtung (V₁) verschiebbar und um eine Drehachse (D) drehbar getragenen Bedienstand (30), wobei der Bedienstand (30) in einem in einer Höhenrichtung (H) oberen Bereich (72) des Bedienstandes (30) vermittels des Bewegungssystems (48) an der Aufhängungsträgeranordnung (28) hängend getragen ist.

## Beschreibung

Die vorliegende Erfindung betrifft ein Bedienstandsystem für eine Arbeitsmaschine.

Die US 7,204,546 B2 offenbart ein Bedienstandsystem für eine Arbeitsmaschine, bei welchem ein Bedienstand auf einem Maschinenrahmen der Arbeitsmaschine vermittels eines Bewegungssystems derart getragen ist, dass der Bedienstand in einer Verschieberichtung bezüglich des Maschinenrahmens verschoben werden kann und bezüglich des Maschinenrahmens um eine zur Verschieberichtung im Wesentlichen orthogonale Drehachse gedreht werden kann. Das Bewegungssystem ist einerseits mit dem Maschinenrahmen und andererseits mit einem in einer Höhenrichtung, also im Wesentlichen einer Vertikalrichtung, unteren Bereich des Bedienstandes gekoppelt, so dass der Bedienstand über das Bewegungssystem auf dem Maschinenrahmen steht.

Die US 5,386,119 offenbart ein Bedienstandsystem, bei welchem ein Bedienstand an einer Aufhängungsträgeranordnung hängend getragen ist. Um bei Bewegung einer Arbeitsmaschine in geneigtem Gelände eine diese Neigung kompensierende, im Wesentlichen vertikale Orientierung des Bedienstandes zu ermöglichen, ist dieser über eine Mehrzahl von teleskopierbaren Aufhängungseinheiten an der Aufhängungsträgeranordnung aufgehängt.

Es ist die Aufgabe der vorliegenden Erfindung, ein Bedienstandsystem für eine Arbeitsmaschine, insbesondere selbstfahrende Bodenbearbeitungsmaschine, bereitzustellen, welches bei umfassender Bewegbarkeit eines Bedienstandes eine definierte Positionierung desselben ermöglicht.

Erfindungsgemäß wird diese Aufgabe gelöst durch ein Bedienstandsystem für eine Arbeitsmaschine, insbesondere selbstfahrende Bodenbearbeitungsmaschine, umfassend:
- eine an einem Maschinenrahmen einer Arbeitsmaschine festzulegende Aufhängungsträgeranordnung,
- einen vermittels eines Bewegungssystems an der Aufhängungsträgeranordnung in einer ersten Verschieberichtung verschiebbar und um eine Drehachse drehbar getragenen Bedienstand,
wobei der Bedienstand in einem in einer Höhenrichtung oberen Bereich des Bedienstandes vermittels des Bewegungssystems an der Aufhängungsträgeranordnung hängend getragen ist.

Das erfindungsgemäße Bedienstandsystem ermöglicht eine Positionierung eines Bedienstandes bezüglich eines Maschinenrahmens einer Arbeitsmaschine in einer Vielzahl von durch Verschieben in der ersten Verschieberichtung und Drehen um die Drehachse erzeugten Positionierungen. Dies ermöglicht einer Bedienperson die Positionierung des Bedienstandes derart, dass ein zu bearbeitendes Areal, beispielsweise der zu verdichtende Boden, in optimaler Art und Weise beobachtet werden kann. Da der Bedienstand über die Aufhängungsträgeranordnung hängend in eine Arbeitsmaschine integriert ist, wird insbesondere auf Grund unvermeidbarer Bewegungsspiele auch unter Schwerkrafteinwirkung der Bedienstand sich stabil positionieren. Gleichzeitig kann die Einleitung von Stößen in den Bedienstand im Vergleich zu einer auf einem Maschinenrahmen stehenden Abstützung des Bedienstandes deutlich vermindert werden, insbesondere wenn dämpfende Aufhängungskomponenten verwendet werden.

Für eine stabile Ausgestaltung kann die Aufhängungsträgeranordnung zwei in der ersten Verschieberichtung in Abstand zueinander angeordnete Aufhängungsträger umfassen.

Um eine definierte Verschiebebewegung erzeugen zu können, wird vorgeschlagen, dass das Bewegungssystem eine an der Aufhängungsträgeranordnung getragene, in der ersten Verschieberichtung langgestreckte Verschiebeschienenanordnung und einen an der Verschiebeschienenanordnung in der ersten Verschieberichtung verschiebbar getragenen Verschiebeschlitten umfasst, und dass der Bedienstand an dem Verschiebeschlitten um die Drehachse drehbar aufgehängt ist.

Eine definierte Positionierung des Bedienstandes kann dadurch unterstützt werden, dass die Verschiebeschienenanordnung wenigstens zwei quer zur ersten Verschieberichtung in Abstand zueinander angeordnete, vorzugsweise stangenartige, Verschiebeschienen umfasst.

Bei Ausgestaltung der Aufhängungsträgeranordnung mit zwei Aufhängungsträgen kann dabei die Verschiebeschienenanordnung an in der ersten Verschieberichtung in Abstand zueinander positionierten Endbereichen jeweils an einem der Aufhängungsträger getragen sein.

Um die Bewegung des Bedienstandes in der ersten Verschieberichtung erzeugen zu können, kann das Bewegungssystem einen Verschiebeantrieb zum Bewegen des Verschiebeschlittens entlang der Verschiebeschienenanordnung in der ersten Verschieberichtung umfassen.

Der Verschiebeantrieb kann ein mit dem Verschiebeschlitten gekoppeltes, in der ersten Verschieberichtung sich erstreckendes und durch einen Bandantrieb zur Bewegung in der ersten Verschieberichtung antreibbares Verschiebeband umfassen.

Um eine mechanische stabile, gleichwohl zuverlässig betreibbare Ausgestaltung des Verschiebeantriebs zu erreichen, kann das Verschiebeband ein um Umlenkrollen, vorzugsweise Zahnrollen, geführtes Endlos-Verschiebeband sein, und der Bandantrieb kann in Zuordnung zu wenigstens einer der Umlenkrollen einen Verschiebeantriebsmotor zum Antreiben der zugeordneten Umlenkrolle zur Drehung um eine Rollendrehachse umfassen.

Für eine stabile Ausgestaltung und eine exakte Positionierbarkeit des Bedienstandes kann das Verschiebeband einen Riemen, vorzugsweise Zahnriemen, oder eine Kette umfassen.

Bei Ausgestaltung der Aufhängungsträgeranordnung mit zwei Aufhängungsträgern kann an jedem Aufhängungsträger eine der Umlenkrollen drehbar getragen sein.

Zur Erzeugung der Drehbewegung des Bedienstandes kann das Bewegungssystem an dem in der Höhenrichtung oberen Bereich des Bedienstandes ein an dem Verschiebeschlitten um die Drehachse drehbar getragenes, vorzugsweise zapfenartiges, Aufhängungselement und an dem Verschiebeschlitten einen Drehantriebsmotor zum Antreiben des Aufhängungselements zur Drehung um die Drehachse umfassen.

Die Einleitung von Stößen in den hängend getragenen Bedienstand kann dadurch weiter gemindert werden, dass der Bedienstand vermittels einer Bedienstandaufhängung mit dem Aufhängungselement gekoppelt ist, wobei die Bedienstandaufhängung eine Mehrzahl von bezüglich der Drehachse von dem Aufhängungselement nach radial außen sich weg erstreckenden und in zu dem Aufhängungselement in radialem Abstand angeordneten Kopplungsbereichen mit dem in der Höhenrichtung oberen Bereich des Bedienstandes jeweils vermittels wenigstens eines elastischen Kopplungselements gekoppelten Kopplungsträgern umfasst.

Die Aufhängungsträgeranordnung kann zum Übergreifen des Bedienstandes in der Höhenrichtung und im Wesentlichen quer zur Höhenrichtung einen geradlinig oder gekrümmt im Wesentlichen in der Höhenrichtung sich erstreckenden ersten Aufhängungsträgeranordnungsbereich und einen im Wesentlichen quer zur Höhenrichtung sich erstreckenden zweiten Aufhängungsträgeranordnungsbereich umfassen, wobei der erste Aufhängungsträgeranordnungsbereich in einem in der Höhenrichtung unteren Endbereich zur Festlegung an dem Maschinenrahmen ausgebildet ist und in einem in der Höhenrichtung oberen Endbereich mit dem zweiten Aufhängungsträgeranordnungsbereich verbunden ist.

Bei Ausgestaltung der Aufhängungsträgeranordnung mit zwei Aufhängungsträgern kann jeder Aufhängungsträger einen ersten Aufhängungsträgerteil und einen zweiten Aufhängungsträgerteil umfassen, wobei dann der erste Aufhängungsträgeranordnungsbereich die ersten Aufhängungsträgerteile umfasst und der zweite Aufhängungsträgeranordnungsbereich die zweiten Aufhängungsträgerteile umfasst.

Eine Erweiterung des Bewegungsspektrums des Bedienstandes kann bei einer vorteilhaften Weiterbildung des erfindungsgemäßen Bedienstandsystems dadurch erreicht werden, dass der erste Aufhängungsträgeranordnungsbereich zur schwenkbaren Befestigung an dem Maschinenrahmen ausgebildet ist, wobei dem ersten Aufhängungsträgeranordnungsbereich ein erster Schwenkantrieb zur Verschwenkung des ersten Aufhängungsträgeranordnungsbereichs bezüglich des Maschinenrahmens zugeordnet ist, oder/und dass der zweite Aufhängungsträgeranordnungsbereich mit dem ersten Aufhängungsträgeranordnungsbereich schwenkbar verbunden ist, wobei dem zweiten Aufhängungsträgeranordnungsbereich ein zweiter Schwenkantrieb zur Verschwenkung des zweiten Aufhängungsträgeranordnungsbereichs bezüglich des ersten Aufhängungsträgeranordnungsbereichs zugeordnet ist. Durch die Verschwenkung des ersten Aufhängungsträgeranordnungsbereich bezüglich des diesen tragenden Maschinenrahmens und eine dabei auch ausgelöste Verschwenkung des zweiten Aufhängungsträgeranordnungsbereich wird es möglich, unabhängig von der Verschiebebewegung in der ersten Verschieberichtung und unabhängig von der Drehbewegung um die Drehachse verschiedene weitere Positionen vorzusehen, welche der Bedienstand bezüglich des Maschinenrahmens einnehmen kann.

Die für die Verschwenkung der Aufhängungsträgeranordnungsbereiche und auch zum Beibehalten einer definierten Positionierung derselben erforderlichen Kräfte können beispielsweise dadurch bereitgestellt werden, dass wenigstens ein Schwenkantrieb wenigstens eine Kolben/Zylinder-Einheit umfasst.

Das Bewegungsspektrum und damit auch das Positionenspektrum des Bedienstandes kann weiter dadurch erweitert werden, dass das Bewegungssystem an der Aufhängungsträgeranordnung in einer zweiten Verschieberichtung im Wesentlichen quer zur ersten Verschieberichtung verschiebbar getragen ist. Wenn beispielsweise die erste Verschieberichtung im Wesentlichen quer zu einer Maschinenlängsrichtung und damit auch einer Bewegungsrichtung einer Arbeitsmaschine orientiert ist, kann die zweite Verschieberichtung im Wesentlichen in der Maschinenlängsrichtung orientiert sein.

Um diese Bewegung in der zweiten Bewegungsrichtung ausführen zu können, kann das Bewegungssystem in Zuordnung zu jedem Aufhängungsträger eine Verschiebeeinheit umfassen, wobei die Verschiebeschienen in jedem ihrer Endbereiche an einer Verschiebeeinheit getragen sind und an jeder Verschiebeeinheit eine der Umlenkrollen getragen ist.

Weiter kann ein Bewegungssystemantrieb zum Verschieben des Bewegungssystems in der zweiten Verschieberichtung vorgesehen sein.

Um vermittels des Bewegungssystemantriebs das gesamte Bewegungssystem definiert in der zweiten Verschieberichtung verschieben zu können, kann der Bewegungssystemantrieb in Zuordnung zu jeder Verschiebeeinheit einen Verschiebeeinheitantrieb, vorzugsweise Kolben/Zylinder-Einheit, umfassen.

Um insbesondere bei größeren Bewegungsgeschwindigkeiten der Arbeitsmaschine das Auftreten einer Pendelbewegung des Bedienstandes zu unterbinden, kann ein Führungssystem vorgesehen sein zum Führen des Bedienstandes in einem in der Höhenrichtung unteren Bereich des Bedienstandes bei Bewegung in der ersten Verschieberichtung oder/und bei Drehung um die Drehachse.

Das Führungssystem kann grundsätzlich ähnlich aufgebaut sein wie das Bewegungssystem und kann eine in der ersten Verschieberichtung langgestreckte Führungsschienenanordnung und einen an der Führungsschienenanordnung in der ersten Verschieberichtung verschiebbar getragenen Führungsschlitten umfassen, wobei der Bedienstand in seinem in der Höhenrichtung unteren Bereich an dem Führungsschlitten um die Drehachse drehbar abgestützt ist.

Für eine stabile Ausgestaltung des Führungssystems kann dieses wenigstens zwei quer zur ersten Verschieberichtung in Abstand zueinander angeordnete, vorzugsweise stangenartige, Führungsschienen umfassen.

Die Erfindung betrifft ferner eine Arbeitsmaschine, insbesondere selbstfahrende Bodenbearbeitungsmaschine, umfassend einen Maschinenrahmen und ein an dem Maschinenrahmen getragenes, erfindungsgemäß aufgebautes Bedienstandsystem.

Beispielsweise kann die Arbeitsmaschine als Bodenverdichter ausgebildet und an dem Maschinenrahmen wenigstens eine Verdichterwalze drehbar getragen sein.

Die vorliegende Erfindung wird nachfolgend mit Bezug auf die beiliegenden Figuren detailliert beschrieben. Es zeigt:
- Fig. 1: eine prinzipielle Seitenansicht einer als selbstfahrender Bodenverdichter ausgebildeten Arbeitsmaschine;
- Fig. 2: einen Teil eines Maschinenrahmens der Arbeitsmaschine der Fig. 1 mit einem daran getragenen Bedienstandsystem bei in einer neutralen Position positioniertem Bedienstand;
- Fig. 3: eine der Fig. 2 entsprechende Darstellung bei seitlich verschobenem und gedrehtem Bedienstand;
- Fig. 4: eine prinzipielle Darstellung eines Bewegungssystems des Bedienstandsystems der Arbeitsmaschine der Fig. 1;
- Fig. 5: eine perspektivische Ansicht eines Verschiebeschlittens des Bewegungssystems der Fig. 4;
- Fig. 6: eine prinzipartige Draufsicht auf den Bedienstand der Arbeitsmaschine der Fig. 1 mit einer in einem Dachbereich des Bedienstandes vorgesehenen Bedienstandaufhängung;
- Fig. 7: eine prinzipartige Seitenansicht einer Weiterbildung des Bedienstandsystems der Arbeitsmaschine der Fig. 1.

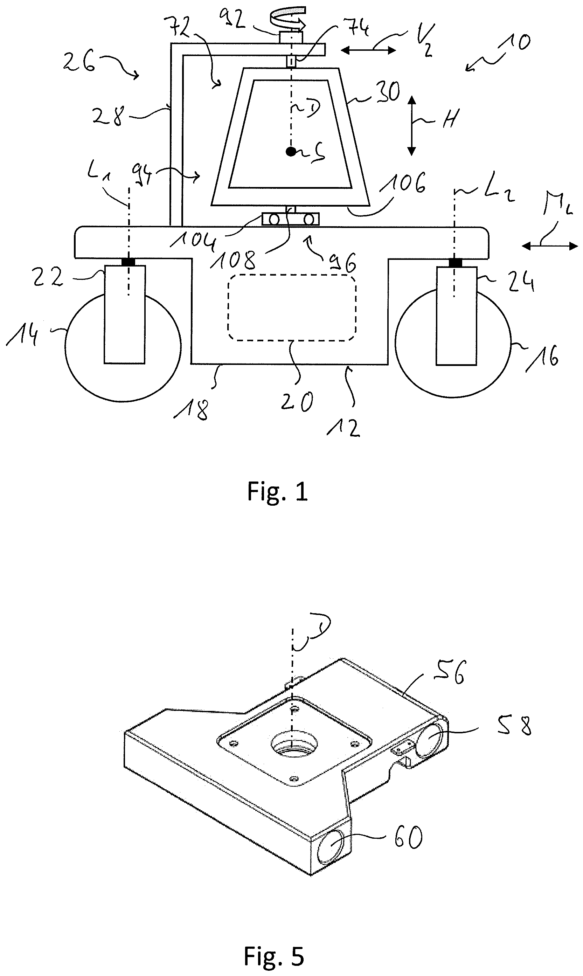

In Fig. 1 ist eine in prinzipartiger Seitenansicht dargestellte Arbeitsmaschine allgemein mit 10 bezeichnet. Die Arbeitsmaschine 10 ist im dargestellten Ausgestaltungsbeispiel als selbstfahrender Bodenverdichter ausgebildet, welcher an einem Maschinenrahmen 12 zwei um jeweilige Walzendrehachsen drehbare Verdichterwalzen 14, 16 aufweist. Die im dargestellten Ausgestaltungsbeispiel als schemelgelenkter Bodenverdichter aufgebaute Arbeitsmaschine 10 umfasst einen Hauptrahmen 18, an welchem beispielsweise auch ein Antriebsaggregat 20 vorgesehen ist, und umfasst in Zuordnung zu jeder Verdichterwalze 14, 16 einen an dem Hauptrahmen 18 um eine jeweilige Lenkachse L₁, L₂ schwenkbar getragenen, einen Lenkschemel bereitstellenden Nebenrahmen 22, 24. Durch Antreiben mindestens einer Verdichterwalze 14, 16 kann die Arbeitsmaschine 10 sich in einer Maschinenlängsrichtung M_{L} über den zu verdichtenden Untergrund bewegen.

An dem Maschinenrahmen 12, insbesondere dem Hauptrahmen 18 derselben, ist ein nachfolgend detailliert beschriebenes Bedienstandsystem 26 mit einer mit dem Maschinenrahmen 12 verbundenen Aufhängungsträgeranordnung 28 und einem an der Aufhängungsträgeranordnung 28 hängend getragenen Bedienstand 30 vorgesehen.

Bevor nachfolgend auf den Aufbau des Bedienstandsystems 26 eingegangen wird, ist darauf hinzuweisen, dass ein derartiges Bedienstandsystem 26 auch bei anders ausgestalteten Arbeitsmaschinen 10, insbesondere auch anders aufgebauten Bodenverdichtern, wie z. B. einem Walzenzug oder dergleichen, eingesetzt werden kann.

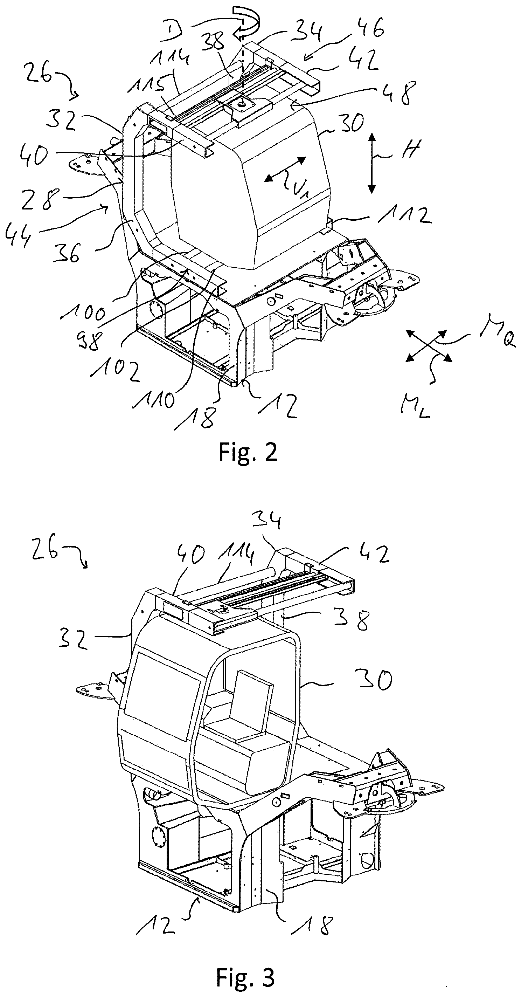

Die Fig. 2 und 3 zeigen detaillierter den Maschinenrahmen 12 bzw. den Hauptrahmen 18 desselben mit dem daran getragenen Bedienstandsystem 26. Die Aufhängungsträgeranordnung 28 umfasst zwei in einer Maschinenquerrichtung M_{Q} in Abstand zueinander angeordnete Aufhängungsträger 32, 34, die jeweils einen in einem in einer Höhenrichtung H, also im Wesentlichen einer Vertikalrichtung, unteren Bereich an dem Maschinenrahmen 12 festgelegten ersten Trägerrahmenteil 36, 38 und von einem jeweiligen oberen Endbereich desselben ausgehenden und im Wesentlichen orthogonal zur Höhenrichtung H sich erstreckenden zweiten Trägerteil 40, 42 umfassen. Die ersten Trägerteile 36, 38 der Aufhängungsträger 32, 34 bilden dabei einen ersten Aufhängungsträgeranordnungsbereich 44, und die zweiten Aufhängungsträgerteile 40, 42 der beiden Aufhängungsträger 32, 34 bilden einen zweiten Aufhängungsträgeranordnungsbereich 46, an dem, wie nachfolgend auch beschrieben, der Bedienstand 30 derart aufgehängt ist, dass dieser um eine im Wesentlichen in der Höhenrichtung H, also im Wesentlichen in Vertikalrichtung, sich erstreckende Drehachse D drehbar und in einer ersten Verschieberichtung V₁ verschiebbar ist, welche im Wesentlichen der Maschinenquerrichtung M_{Q} entspricht.

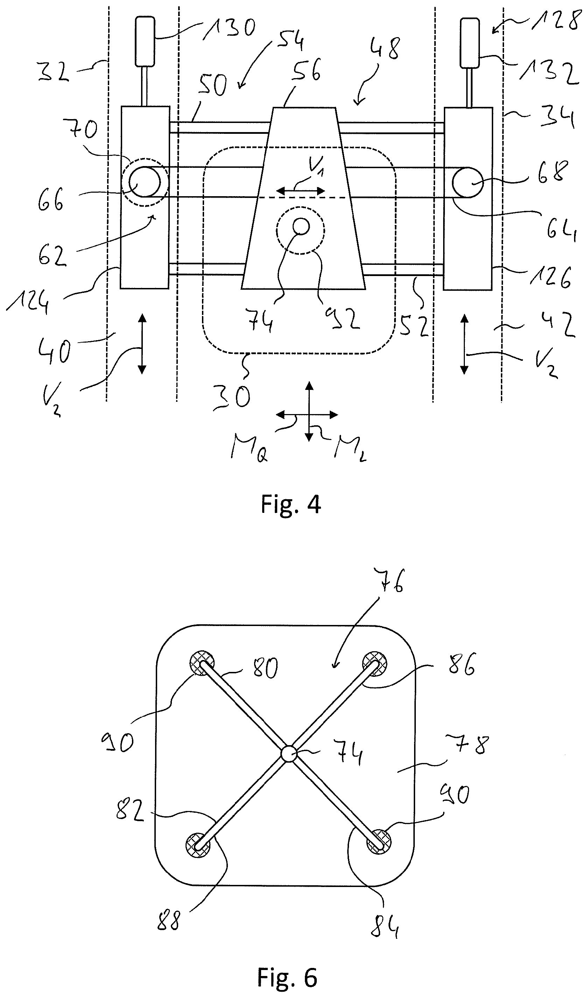

Zur Erzeugung dieser verschiedenen Bewegungen des Bedienstandes 30 bezüglich des Maschinenrahmens 12 umfasst das Bedienstandsystem 26 ferner ein in Fig. 4 detaillierter dargestelltes Bewegungssystem 48. Das Bewegungssystem 48 umfasst eine im dargestellten Beispiel mit zwei stangenartigen Verschiebeschienen 50, 52 aufgebaute Verschiebeschienenanordnung 54. Die beiden Verschiebeschienen 50, 52 erstrecken sich im Wesentlichen in der ersten Verschieberichtung V₁ bzw. der Maschinenquerrichtung M_{Q} und auch im Wesentlichen orthogonal zur Höhenrichtung H, so dass die erste Verschieberichtung V₁ im Wesentlichen in einer horizontalen Ebene orientiert ist. In ihren beiden Längsendbereichen sind die Verschiebeschienen 50, 52 an den zweiten Aufhängungsträgerteilen 40, 42 der beiden Aufhängungsträger 28, 30 getragen.

An den beiden Verschiebeschienen 50, 52 ist ein Verschiebeschlitten 56 in der ersten Verschieberichtung V₁ verschiebbar getragen. In Zuordnung zu jeder der beiden Verschiebeschienen 50, 52 weist der Verschiebeschlitten 56 eine Verschiebeöffnung 58, 60 auf, in welcher eine jeweilige Verschiebeschiene 50, 52 beispielsweise unter Zwischenlagerung einer jeweiligen Lageranordnung derart aufgenommen ist, dass der Verschiebeschlitten 56 entlang der beispielsweise mit kreisrundem Querschnitt ausgebildeten Verschiebeschienen 50, 52 verschiebbar ist.

Um die Verschiebung des Verschiebeschlittens 56 in der ersten Verschieberichtung V₁ erzeugen zu können, ist diesem ein Verschiebeantrieb 62 zugeordnet. Der Verschiebeantrieb 62 umfasst ein beispielsweise als Riemen, insbesondere Zahnriemen oder Kette ausgebildetes Endlos-Verschiebeband 64. Im Bereich der Aufhängungsträger 28, 30 bzw. der zweiten Aufhängungsträgerteile 40, 42 derselben ist das Endlos-Verschiebeband 64 um jeweilige Umlenkrollen 66, 68 geführt. Beispielsweise im Zuordnung zur Umlenkrolle 66 ist ein beispielsweise als Elektromotor ausgebildeter Verschiebeantriebsmotor 70 vorgesehen. Die Umlenkrolle 66 kann beispielsweise direkt oder über ein Zahnradgetriebe mit einer Antriebswelle des Verschiebeantriebsmotors 70 gekoppelt sein. Durch Erregen des einen Bandantrieb des Endlos-Verschiebebandes 64 bereitstellenden Verschiebeantriebsmotors 70 wird die Umlenkrolle 66 in Drehung versetzt, so dass entsprechend das Endlos-Verschiebeband 64 mit seinen zwischen den beiden Umlenkrollen 66, 68 liegenden Erstreckungsabschnitten sich in der ersten Verschieberichtung V₁ bewegt. Wie durch eine Strichlinie in Fig. 4 angedeutet, ist der Verschiebeschlitten 56 mit einem dieser Erstreckungsabschnitte gekoppelt, so dass durch Bewegen des Endlos-Verschiebebandes 64 auch eine entsprechende Bewegung des Verschiebeschlittens 56 in der ersten Verschieberichtung V₁ erzeugt wird.

**In** einem in der Höhenrichtung H oberen Bereich 72 des Bedienstandes 30 ist dieser vermittels eines beispielsweise zapfenartig ausgebildeten Aufhängungselements 74 an dem Verschiebeschlitten 56 um eine Drehachse D drehbar getragen. Das zapfenartige Aufhängungselement 74 ist über eine Bedienstandaufhängung 76 in dem in der Höhenrichtung oberen Bereich 72 des Bedienstandes 30 beispielsweise mit einem Dachbereich 78 des Bedienstandes 30 gekoppelt. Die Bedienstandaufhängung 76 umfasst im dargestellten Ausgestaltungsbeispiel vier bezüglich der Drehachse D bzw. des Aufhängungselements 74 sich von radial innen nach radial außen erstreckende Kopplungsträger 80, 82, 84, 86. Diese sind in ihrem radial inneren Bereich mit dem Aufhängungselement 74 beispielsweise durch Verschraubung, Verschweißung oder dergleichen im Wesentlichen starr verbunden und sind in ihrem jeweiligen weiter radial außen angeordneten Kopplungsbereich 88 über ein jeweiliges Kopplungselement 90 mit dem Bedienstand 30 im Dachbereich 78 verbunden. Die Kopplungselemente 90 sind elastisch bzw. mit elastischem Material, wie z. B. Gummimaterial oder dergleichen, aufgebaut, so dass der Bedienstand 30 über die Bedienstandaufhängung 76 schwingungsdämpfend an der Aufhängungsträgeranordnung 28 aufgehängt ist.

Das Aufhängungselement 74 ist in dem Verschiebeschlitten 56 beispielsweise über eine entsprechende Lagerung um die Drehachse D drehbar getragen. In Zuordnung zu dem Aufhängungselement 74 ist an dem Verschiebeschlitten 56 ein beispielsweise als Elektromotor ausgebildeter Drehantriebsmotor 92 getragen. Der Drehantriebsmotor 92 bzw. dessen Ausgangswelle kann direkt oder über ein Zahnradgetriebe oder dergleichen mit dem Aufhängungselement 74 gekoppelt sein, so dass durch Erregung des Drehantriebsmotors 92 das Aufhängungselement 74 und mit diesem der Bedienstand 30 um die Drehachse D gedreht werden kann.

Da der Bedienstand 30 ausschließlich über das Aufhängungselement 74 mit dem Verschiebeschlitten 56 gekoppelt bzw. an diesem aufgehängt ist, ist zum Vermeiden von übermäßig großen Kippmomenten das Aufhängungselement 74 bezüglich des Bedienstands 30 so positioniert, dass in der Höhenrichtung H, also im Wesentlichen der Vertikalrichtung, das Aufhängungselement 74 im Wesentlichen direkt über dem Massenschwerpunkt S des Bedienstands 30 positioniert ist, so dass auch die Drehachse D sich in der Höhenrichtung H durch den Massenschwerpunkt S hindurch erstreckt. Aufgrund eines im Allgemeinen vorhanden Bewegungsspiel im Bereich der Aufhängungslagerung des Aufhängungselements 74 am Verschiebeschlitten 56 und der elastischen Kopplung der Bedienstandaufhängung 76 mit dem Bedienstand 30 vermittels der elastischen Kopplungselemente 90 wird der Bedienstand 30 sich grundsätzlich so positionieren, dass dessen Massenschwerpunkt S direkt unter dem Bereich der Aufhängung, also unter dem Aufhängungselement 74 liegen wird.

Um insbesondere bei schnellerer Bewegung der Arbeitsmaschine 10 das Auftreten von Pendelbewegungen des Bedienstandes 30 zu verhindern, kann das Bedienstandsystem 26 ein den Bedienstand 30 in einem in der Höhenrichtung unteren Bereich 94 desselben bei der Bewegung in der ersten Verschieberichtung V₁ bzw. bei Drehung um die Drehachse D führendes Führungssystem 96 umfassen. Das Führungssystem 96 kann grundsätzlich ähnlich aufgebaut sein wie das Bewegungssystem 48 und umfasst eine Führungsschienenanordnung 98 mit zwei in der ersten Verschieberichtung V₁ sich erstreckenden und quer zur ersten Verschieberichtung V₁ in Abstand zueinander angeordneten Führungsschienen 100, 102, an welchen ein Führungsschlitten 104 in der ersten Verschieberichtung V₁ bewegbar geführt ist. Ein beispielsweise an einem Bodenbereich 106 des Bedienstandes 30 vorgesehenes, beispielsweise zapfenartiges Führungselement 108 ist in einer zugeordneten Öffnung des Führungsschlittens 104 um die Drehachse D drehbar aufgenommen.

Die beiden Führungsschienen 100, 102 sind in ihren Längsendbereichen an jeweiligen dritten Aufhängungsträgerteilen 110, 112 der Aufhängungsträger 32, 34 festgelegt, so dass die Aufhängungsträger 32, 34 mit den jeweiligen ersten, zweiten und dritten Teilen derselben grundsätzlich eine C-förmige Struktur aufweisen. Da auch die Verschiebeschienen 50, 52 der Verschiebeschienenanordnung 54 mit den Aufhängungsträgern 32, 34 starr verbunden sein können, ist eine in sich stabile und steife Struktur der Aufhängungsträgeranordnung 28 vorgesehen. Um hier eine zusätzliche Versteifung zu erreichen, können an verschiedenen Positionen weitere Versteifungselemente 114, 115 zwischen den Aufhängungsträgern 32, 34 angeordnet bzw. mit diesen jeweils starr verbunden sein.

Durch das Führungssystem 96 wird der Bedienstand 30 in seinem in der Höhenrichtung unteren Bereich 94 bei der Bewegung in der ersten Verschieberichtung V₁ bzw. auch bei der Drehbewegung um die Drehachse D definiert geführt, wobei das Auftreten von Pendelbewegungen weiter dadurch unterdrückt werden kann, dass beispielsweise zwischen dem Führungsschlitten 104 und den Führungsschienen 102 Dämpfungs- bzw. Reibungselemente wirken, welche zwar eine im Wesentlichen freie Bewegung des Führungsschlittens 104 in der ersten Verschieberichtung V₁ zulassen, jedoch das Auftreten von Schwingungen unterbinden. Mit dem Führungselement 108 kann der Bedienstand 30 bezüglich des Führungsschlittens 104 grundsätzlich frei drehbar sein. Um auch unter Berücksichtigung der Elastizität der Kopplungselemente 90 eine Bewegung des Bedienstandes 30 in der Höhenrichtung H zumindest in geringem Ausmaß zuzulassen, kann das Führungselement 108 bezüglich des Führungsschlittens 104 in der Höhenrichtung H frei bewegbar sein. Alternativ könnte der Bedienstand 30 auch in der Höhenrichtung H auf dem Führungsschlitten 104 abgestützt sein, beispielsweise über eine Drehung des Bedienstandes 30 bezüglich des Führungsschlittens 104 zulassende elastische Abstützelemente.

Grundsätzlich könnte das Führungssystem 96 auch so ausgebildet sein, dass der Führungsschlitten 104 durch einen zugeordneten Führungsantrieb in der ersten Verschieberichtung V₁ zur Bewegung antreibbar ist. Ein derartiger Führungsantrieb könnte ähnlich strukturiert sein, wie der in Zuordnung zu dem Bewegungssystem 48 vorgesehene Verschiebeantrieb 62 und könnte zu diesem synchron betrieben werden.

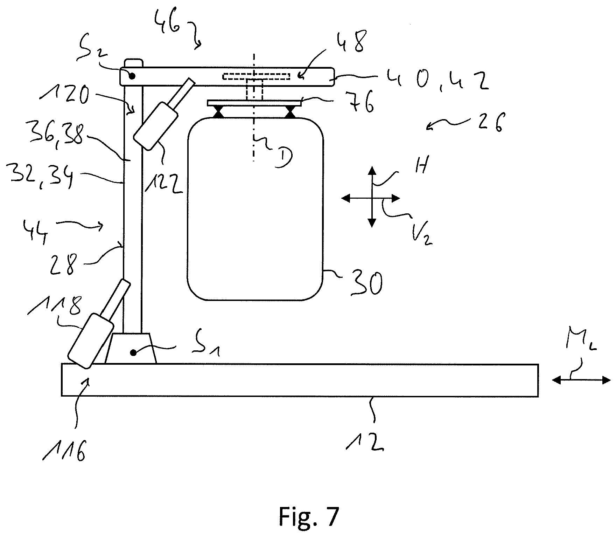

Eine Weiterbildung des Bedienstandsystems 26 ist in Fig. 7 veranschaulicht. Während bei dem auch in den Fig. 2 und 3 veranschaulichten Bedienstandsystem 26 die Aufhängungsträger 32, 34 mit ihrer beispielsweise C-förmigen Struktur in sich starr ausgebildet sind, ist bei der in Fig. 7 veranschaulichten Weiterbildung der die beiden ersten Aufhängungsträgerteile 36, 38 umfassende erste Aufhängungsträgeranordnungsbereich 44 am Maschinenrahmen 12 um eine im Wesentlichen horizontal sich erstreckende, zur Höhenrichtung H also orthogonale erste Schwenkachse S₁ schwenkbar getragen.

In Zuordnung zum ersten Aufhängungsträgeranordnungsbereich 44 ist ein allgemein mit 116 bezeichneter erster Schwenkantrieb vorgesehen, der beispielsweise in Zuordnung zu jedem der beiden Aufhängungsträger 32, 34 eine Kolben/Zylinder-Einheit 118 umfassen kann. Durch Aktivieren der Kolben/Zylinder-Einheiten 118 können die ersten Aufhängungsträgerteile 36, 38 der Aufhängungsträger 32, 34 bezüglich des Maschinenrahmens 12 um die erste Schwenkachse S₁ verschwenkt werden.

Die den zweiten Aufhängungsträgeranordnungsbereich 46 bereitstellenden zweiten Aufhängungsträgerteile 40, 42 sind mit den ersten Aufhängungsträgerteilen 36, 38 der Aufhängungsträger 32, 34 um eine zweite Schwenkachse S₂ schwenkbar verbunden, wobei die zweite Schwenkachse S₂ parallel zur ersten Schwenkachse S₁ verläuft. Um diese Verschwenkung zu erreichen, ist ein zweiter Schwenkantrieb 120 vorgesehen, welcher in Zuordnung zu jedem Paar aus erstem Aufhängungsträgerteil 36, 38 und zweitem Aufhängungsträgerteil 40, 42 eine Kolben/Zylinder-Einheit 122 umfassen kann. Durch Aktivierung der zweiten Kolben/Zylinder-Einheiten 122 können die zweiten Aufhängungsträgerteile 40, 42 und damit der zweite Aufhängungsträgeranordnungsbereich 46 bezüglich der ersten Aufhängungsträgerteile 36, 38 und damit bezüglich des ersten Aufhängungsträgeranordnungsbereichs 44 verschwenkt werden.

Durch eine aufeinander abgestimmte Verschwenkung der beiden Aufhängungsträgeranordnungsbereiche 44, 46 wird bei im Wesentlichen in einer horizontalen Orientierung gehaltenem erstem Aufhängungsträgeranordnungsbereich 46 grundsätzlich der Bedienstand 30 in der Maschinenlängsrichtung M_{L} bewegt. Gleichzeitig bewegt der Bedienstand 30 sich auch in der Höhenrichtung H. Diese Bewegung des Bedienstands 30 bzw. die dadurch erzeugbaren Positionierungen des Bedienstands 30 bezüglich des Verschieberahmens 12 kann der Verschiebebewegung in der ersten Verschieberichtung V₁ bzw. der Drehbewegung um die Drehachse D bzw. den dadurch erzeugbaren Positionierungen des Bedienstands 30 überlagert werden.

Bei einer weiteren in Fig. 4 veranschaulichten Weiterbildung des Bedienstandsystems 28 kann das gesamte Bewegungssystem 48 in einer zur ersten Verschieberichtung V₁ im Wesentlichen orthogonalen zweiten Verschieberichtung V₂ bewegt werden, wobei die zweite Verschieberichtung V₂ im Wesentlichen der Maschinenlängsrichtung M_{L} entsprechen kann.

Um diese Bewegung erreichen zu können, umfasst das Bewegungssystem 48 in Zuordnung zu jedem Aufhängungsträger 32, 34 eine Verschiebeeinheit 124, 126, welche im jeweiligen ersten Aufhängungsträgerteil 40, 42 beispielsweise über entsprechende Lageranordnungen, Rollen oder dgl. in der zweiten Verschieberichtung V₂ verschiebbar aufgenommen ist. An den beiden Verschiebeeinheiten 124, 126 sind die Verschiebeschienen 50, 52 der Verschiebeschienenanordnung 54 mit ihren jeweiligen Längsendbereichen festgelegt. Ferner ist an jeder der Verschiebeeinheiten 124, 126 eine der beiden Umlenkrollen 66, 68 drehbar getragen. Beispielsweise kann an der Verschiebeeinheit 124 der zum Antreiben der Umlenkrolle 66 vorgesehene Verschiebeantriebsmotor 70 getragen sein.

Zum Verschieben der Verschiebeeinheiten 124, 126 in der zweiten Verschieberichtung V₂ ist ein allgemein mit 128 bezeichneter Bewegungssystemantrieb vorgesehen. Dieser kann beispielsweise in Zuordnung zu jeder Verschiebeeinheit 124, 126 einen beispielsweise als Kolben/Zylinder-Einheit ausgebildeten Verschiebeeinheitantrieb 130, 132 umfassen. Durch synchrone Aktivierung der Verschiebeeinheitantriebe 130, 132 werden die Verschiebeeinheiten 124, 126 und damit das daran getragene Bewegungssystem 48 quer zur ersten Verschieberichtung V₁ in der zweiten Verschieberichtung V₂ verschoben, so dass sich die Positionierung des Bedienstands 30 bezüglich des zweiten Aufhängungsträgeranordnungsbereichs 46 in der zweiten Verschieberichtung V₂, also im Wesentlichen der Maschinenlängsrichtung M_{L} verändert.

Eine derartige Verschiebung des Bewegungssystems 48 in der zweiten Verschieberichtung V₂ kann bei dem Bedienstandsystem 26 unabhängig davon vorgesehen sein, ob die Aufhängungsträgeranordnungsbereiche 44, 46 mit dem Maschinenrahmen 12 und miteinander starr gekoppelt sind, so wie in Fig. 2 und 3 dargestellt, oder bezüglich des Maschinenrahmens 12 bzw. bezüglich einander verschwenkbar sind, so wie in Fig. 7 veranschaulicht. Bei starrer Kopplung der Aufhängungsträgeranordnungsbereiche 44, 46 miteinander und mit dem Maschinenrahmen 12 kann, ähnlich wie dies in den Fig. 1 und 2 angedeutet ist, auch ein den Bedienstand 30 in seinem in der Höhenrichtung H unteren Bereich 94 führendes Führungssystem 96 vorgesehen sein. Dieses kann in den jeweiligen dritten Aufhängungsträgerteilen 110, 112 den Verschiebeeinheiten 124, 126 entsprechende Führungseinheiten umfassen, an welchen die Führungsschienen 100, 102 mit ihren Längsendbereichen festgelegt sind, so dass durch eine entsprechende Verschiebbarkeit der Führungseinheiten in den dritten Aufhängungsträgerteilen 110, 112 bei Bewegung des Bewegungssystems 48 in der zweiten Verschieberichtung V₂ das Führungssystem 96 dieser Verschiebung folgen kann. Alternativ könnte dem Führungssystem 96 ein Führungssystemantrieb zugeordnet sein, durch welchen synchron zur Verschiebung des Bewegungssystems 48 in der zweiten Verschieberichtung V₂ eine entsprechende Verschiebung des Führungssystems 96 in der zweiten Verschieberichtung V₂ hervorgerufen wird.

Sind die Aufhängungsträgeranordnungsbereiche 44, 46 bezüglich einander und bezüglich des Maschinenrahmens 12 schwenkbar, so wie in Fig. 7 gezeigt, kann aufgrund der bei einer derartigen Verschwenkung hervorgerufenen Änderungen der Höhenlage des Bedienstandes 30 auf ein derartiges Führungssystem verzichtet werden. Alternativ könnte das Führungssystem so gestaltet sein, dass beispielsweise bei entsprechend langer Ausgestaltung des Führungselements 108 dieses auch bei Höhenbewegung des Bedienstandes 30 sich in der Höhenrichtung H bezüglich des Führungsschlittens 104 bewegen kann, gleichwohl aber der Eingriff des Führungselements 108 in den Führungsschlitten 104 erhalten bleibt.

## Patentansprüche

1. Bedienstandsystem für eine Arbeitsmaschine, insbesondere selbstfahrende Bodenbearbeitungsmaschine, umfassend:
- eine an einem Maschinenrahmen (12) einer Arbeitsmaschine (10) festzulegende Aufhängungsträgeranordnung (28),
- einen vermittels eines Bewegungssystems (48) an der Aufhängungsträgeranordnung (26) in einer ersten Verschieberichtung (V₁) verschiebbar und um eine Drehachse (D) drehbar getragenen Bedienstand (30),
wobei der Bedienstand (30) in einem in einer Höhenrichtung (H) oberen Bereich (72) des Bedienstandes (30) vermittels des Bewegungssystems (48) an der Aufhängungsträgeranordnung (28) hängend getragen ist.

2. Bedienstandsystem nach Anspruch 1,
**dadurch gekennzeichnet, dass** die Aufhängungsträgeranordnung (28) zwei in der ersten Verschieberichtung (V₁) in Abstand zueinander angeordnete Aufhängungsträger (32, 34) umfasst.

3. Bedienstandsystem nach Anspruch 1 oder 2,
**dadurch gekennzeichnet, dass** das Bewegungssystem (48) eine an der Aufhängungsträgeranordnung (28) getragene, in der ersten Verschieberichtung (V₁) langgestreckte Verschiebeschienenanordnung (54) und einen an der Verschiebeschienenanordnung (54) in der ersten Verschieberichtung (V₁) verschiebbar getragenen Verschiebeschlitten (56) umfasst, und dass der Bedienstand (30) an dem Verschiebeschlitten (56) um die Drehachse (D) drehbar aufgehängt ist,
vorzugsweise wobei die Verschiebeschienenanordnung (54) wenigstens zwei quer zur ersten Verschieberichtung (V₁) in Abstand zueinander angeordnete, vorzugsweise stangenartige, Verschiebeschienen (50, 52) umfasst.

4. Bedienstandsystem nach Anspruch 2 und Anspruch 3
**dadurch gekennzeichnet, dass** die Verschiebeschienenanordnung (54) an in der ersten Verschieberichtung (V₁) in Abstand zueinander positionierten Endbereichen jeweils an einem der Aufhängungsträger (32, 34) getragen ist.

5. Bedienstandsystem nach Anspruch 3 oder 4,
**dadurch gekennzeichnet, dass** das Bewegungssystem (48) einen Verschiebeantrieb (62) zum Bewegen des Verschiebeschlittens (56) entlang der Verschiebeschienenanordnung (54) in der ersten Verschieberichtung (V₁) umfasst.

6. Bedienstandsystem nach Anspruch 5,
**dadurch gekennzeichnet, dass** der Verschiebeantrieb (62) ein mit dem Verschiebeschlitten (56) gekoppeltes, in der ersten Verschieberichtung (V₁) sich erstreckendes und durch einen Bandantrieb zur Bewegung in der Verschieberichtung (V₁) antreibbares Verschiebeband (64) umfasst,
vorzugsweise wobei das Verschiebeband (64) ein um Umlenkrollen (66, 68), vorzugsweise Zahnrollen, geführtes Endlos-Verschiebeband (64) ist, und dass der Bandantrieb in Zuordnung zu wenigstens einer der Umlenkrollen (66, 68) einen Verschiebeantriebsmotor (70) zum Antreiben der zugeordneten Umlenkrolle (66) zur Drehung um eine Rollendrehachse umfasst.

7. Bedienstandsystem nach Anspruch 6,
**dadurch gekennzeichnet, dass** das Verschiebeband (64) einen Riemen, vorzugsweise Zahnriemen, oder eine Kette umfasst.

8. Bedienstandsystem nach Anspruch 2 und Anspruch 6,
**dadurch gekennzeichnet, dass** an jedem Aufhängungsträger (32, 34) eine der Umlenkrollen (66, 68) drehbar getragen ist.

9. Bedienstandsystem nach einem der Ansprüche 3-8,
**dadurch gekennzeichnet, dass** das Bewegungssystem (48) an dem in der Höhenrichtung (72) oberen Bereich des Bedienstandes (30) ein an dem Verschiebeschlitten (56) um die Drehachse (D) drehbar getragenes, vorzugsweise zapfenartiges, Aufhängungselement (74) und an dem Verschiebeschlitten (56) einen Drehantriebsmotor (92) zum Antreiben des Aufhängungselements (74) zur Drehung um die Drehachse (D) umfasst,
vorzugsweise wobei der Bedienstand (30) vermittels einer Bedienstandaufhängung (76) mit dem Aufhängungselement (74) gekoppelt ist, wobei die Bedienstandaufhängung (76) eine Mehrzahl von bezüglich der Drehachse (D) von dem Aufhängungselement (74) nach radial außen sich weg erstreckenden und in zu dem Aufhängungselement (74) in radialem Abstand angeordneten Kopplungsbereichen (88) mit dem in der Höhenrichtung (H) oberen Bereich (72) des Bedienstandes (30) jeweils vermittels wenigstens eines elastischen Kopplungselements (90) gekoppelten Kopplungsträgern (80, 82, 84, 86) umfasst.

10. Bedienstandsystem nach einem der Ansprüche 1-9,
**dadurch gekennzeichnet, dass** die Aufhängungsträgeranordnung (28) einen im Wesentlichen in der Höhenrichtung (H) sich erstreckenden ersten Aufhängungsträgeranordnungsbereich (44) und einen im Wesentlichen quer zur Höhenrichtung (H) sich erstreckenden zweiten Aufhängungsträgeranordnungsbereich (46) umfasst, wobei der erste Aufhängungsträgeranordnungsbereich (44) in einem in der Höhenrichtung (H) unteren Endbereich zur Festlegung an dem Maschinenrahmen (12) ausgebildet ist und in einem in der Höhenrichtung (H) oberen Endbereich mit dem zweiten Aufhängungsträgeranordnungsbereich (46) verbunden ist.

11. Bedienstandsystem nach Anspruch 10, sofern auf Anspruch 2 rückbezogen,
**dadurch gekennzeichnet, dass** jeder Aufhängungsträger (32, 34) einen ersten Aufhängungsträgerteil (36, 38) und einen zweiten Aufhängungsträgerteil (40, 42) umfasst, und dass der erste Aufhängungsträgeranordnungsbereich (44) die ersten Aufhängungsträgerteile (36, 38) umfasst und der zweite Aufhängungsträgeranordnungsbereich (46) die zweiten Aufhängungsträgerteile (40, 42) umfasst.

12. Bedienstandsystem nach Anspruch 10 oder 11,
**dadurch gekennzeichnet, dass** der erste Aufhängungsträgeranordnungsbereich (44) zur schwenkbaren Befestigung an dem Maschinenrahmen (12) ausgebildet ist, wobei dem ersten Aufhängungsträgeranordnungsbereich (44) ein erster Schwenkantrieb (116) zur Verschwenkung des ersten Aufhängungsträgeranordnungsbereichs (44) bezüglich des Maschinenrahmens (12) zugeordnet ist, oder/und dass der zweite Aufhängungsträgeranordnungsbereich (46) mit dem ersten Aufhängungsträgeranordnungsbereich (44) schwenkbar verbunden ist, wobei dem zweiten Aufhängungsträgeranordnungsbereich (46) ein zweiter Schwenkantrieb (120) zur Verschwenkung des zweiten Aufhängungsträgeranordnungsbereichs (46) bezüglich des ersten Aufhängungsträgeranordnungsbereichs (44) zugeordnet ist,
vorzugsweise wobei wenigstens ein Schwenkantrieb (116, 120) wenigstens eine Kolben/Zylinder-Einheit (118, 122) umfasst.

13. Bedienstandsystem nach einem der Ansprüche 3-12,
**dadurch gekennzeichnet, dass** das Bewegungssystem (48) an der Aufhängungsträgeranordnung (28) in einer zweiten Verschieberichtung (V₂) im Wesentlichen quer zur ersten Verschieberichtung (V₁) verschiebbar getragen ist.

14. Bedienstandsystem nach Anspruch 13 und Anspruch 4 und Anspruch 8,
**dadurch gekennzeichnet, dass** das Bewegungssystem (48) in Zuordnung zu jedem Aufhängungsträger (32, 34) eine Verschiebeeinheit (124, 126) umfasst, wobei die Verschiebeschienen (50, 52) in jedem ihrer Endbereiche an einer Verschiebeeinheit (124, 126) getragen sind und an jeder Verschiebeeinheit (124, 126) eine der Umlenkrollen (66, 68) getragen ist.

15. Bedienstandsystem nach Anspruch 13 oder 14,
**dadurch gekennzeichnet, dass** ein Bewegungssystemantrieb (128) zum Verschieben des Bewegungssystems (48) in der zweiten Verschieberichtung (V₂) vorgesehen ist.

16. Bedienstandsystem nach Anspruch 14 und Anspruch 15,
**dadurch gekennzeichnet, dass** der Bewegungssystemantrieb (128) in Zuordnung zu jeder Verschiebeeinheit (124, 126) einen Verschiebeeinheitantrieb (130, 132), vorzugsweise Kolben/Zylinder-Einheit, umfasst.

17. Bedienstandsystem nach einem der Ansprüche 1-16,
**dadurch gekennzeichnet, dass** ein Führungssystem (96) vorgesehen ist zum Führen des Bedienstandes (30) in einem in der Höhenrichtung (H) unteren Bereich (94) des Bedienstandes (30) bei Bewegung in der ersten Verschieberichtung (V₁) oder/und bei Drehung um die Drehachse (D),
vorzugsweise wobei:
- das Führungssystem (94) eine in der ersten Verschieberichtung (V₁) langgestreckte Führungsschienenanordnung (98) und einen an der Führungsschienenanordnung (98) in der ersten Verschieberichtung (V₁) verschiebbar getragenen Führungsschlitten (104) umfasst, wobei der Bedienstand (30) in seinem in der Höhenrichtung (H) unteren Bereich (94) an dem Führungsschlitten (104) um die Drehachse (D) drehbar abgestützt ist,
oder/und
- das Führungssystem (96) wenigstens zwei quer zur ersten Verschieberichtung (V₁) in Abstand zueinander angeordnete, vorzugsweise stangenartige, Führungsschienen (100, 102) umfasst.

18. Arbeitsmaschine, insbesondere selbstfahrende Bodenbearbeitungsmaschine, umfassend einen Maschinenrahmen (12) und ein an dem Maschinenrahmen (12) getragenes Bedienstandsystem (26) nach einem der vorangehenden Ansprüche.

19. Arbeitsmaschine nach Anspruch 18,
**dadurch gekennzeichnet, dass** die Arbeitsmaschine (10) als Bodenverdichter ausgebildet ist und an dem Maschinenrahmen (12) wenigstens eine Verdichterwalze (14, 16) drehbar getragen ist.
